Europäisches Patentamt

(19) European Patent Office

Office européen des brevets

(11) Numéro de publication: **0 052 170**
**A1**

(12) **DEMANDE DE BREVET EUROPEEN**

(21) Numéro de dépôt: **80401651.7**

(22) Date de dépôt: **18.11.80**

(51) Int. Cl.³: **B 63 B 25/16**
**F 17 C 13/02, G 05 D 9/02**

(43) Date de publication de la demande:
26.05.82 **Bulletin 82/21**

(84) Etats contractants désignés:
**BE DE FR SE**

(71) Demandeur: **Drumare, Huguette**
**28, rue du Commandant Vesco**
**F-76310 Sainte-Adresse(FR)**

(72) Inventeur: **Drumare, Huguette**
**28, rue du Commandant Vesco**
**F-76310 Sainte-Adresse(FR)**

(74) Mandataire: **Hoisnard, Jean-Claude et al,**
**Cabinet Beau de Lomenie 55, rue d'Amsterdam**
**F-75008 Paris(FR)**

(54) **Citerne destinée à contenir un gaz liquéfié.**

㊵ L'invention est relative à une citerne (1) destinée à contenir un gaz liquéfié (2), constituée par la citerne (1) proprement dite, un conduit de remplissage (3), et une vanne d'obturation (8) du conduit.

Cette citerne est munie d'un dispositif thermosensible (11) de commande de la vanne dont l'élément sensible (11) à la température est disposé à l'intérieur de la citerne à proximité d'un niveau de remplissage prédéterminé (15) et dont l'effet est de placer la vanne (8) dans une configuration d'obturation complète du conduit de remplissage, lorsque le niveau de remplissage prédéterminé est atteint, et, dans sa configuration de non-obturation du conduit, lorsque le niveau de remplissage prédéterminé n'est pas atteint.

Une application est la réalisation d'un méthanier à remplissage total des citernes.

**FIG.1**

Croydon Printing Company Ltd.

Citerne destinée à contenir un gaz liquéfié.

Le domaine technique de l'invention est celui des dispositifs de sécurité relatifs à la conception des citernes de méthaniers, et, plus généralement, des citernes susceptibles de contenir du gaz liquéfié.

Selon la technique connue, de telles citernes ne sont emplies au maximum qu'à 98 % de leur volume pour éviter les risques d'un débordement éventuel et de l'épandage qui en résulterait du gaz liquéfié sur la partie supérieure de la citerne. Un tel épandage d'un liquide à -160° C aurait pour effet de réaliser un choc thermique et d'engendrer des cassures dues à la fragilisation de l'acier aux basses températures.

Le problème posé est donc d'interdire tous débordements, notamment au moment du remplissage des citernes. L'invention propose un dispositif adapté à l'obtention de ce résultat.

Elle a donc pour objet une citerne destinée à contenir un gaz liquéfié, telle que, notamment, une citerne de navire transporteur de gaz naturel liquéfié ou de gaz de pétrole, constituée par la citerne proprement dite, par un conduit de remplissage, et par au moins une vanne d'obturation dudit conduit.

Cette citerne est munie d'au moins un dispositif thermosensible de commande de ladite vanne d'obturation,

. qui est attelé à cette vanne,

. dont l'élément sensible à la température est disposé à l'intérieur de la citerne à proximité d'un niveau de remplissage prédéterminé et a une température susceptible d'être égale, soit à la température du gaz liquéfié contenu dans la citerne lorsque ledit gaz liquéfié atteint le niveau de remplissage prédéterminé, soit à une température supérieure à celle dudit gaz liquéfié lorsque ce niveau de remplissage prédéterminé n'est pas atteint, et

. dont l'effet sur la vanne d'obturation est de placer cette vanne dans une configuration d'obturation complète du conduit de remplissage, lorsque le niveau de remplissage prédéterminé est atteint, et, dans sa configuration de non-obturation du conduit de remplissage, lorsque le niveau de remplissage

prédéterminé n'est pas atteint.

Les dispositions suivantes sont, en outre, de préférence adoptées :

- la citerne est munie d'une autre vanne, disposée sur le conduit de remplissage, et d'un autre dispositif thermosensible de commande de la configuration de cette autre vanne, dont l'élément sensible est disposé à proximité d'un autre niveau de remplissage prédéterminé, inférieur audit niveau de remplissage, cependant que l'effet de cet autre dispositif thermosensible sur cette autre vanne est de placer celle-ci dans une configuration d'obturation seulement partielle du conduit de remplissage lorsque ledit autre niveau de remplissage prédéterminé est atteint, et, dans sa configuration de non-obturation du conduit de remplissage, lorsque cet autre niveau de remplissage prédéterminé n'est pas atteint,

- l'élément sensible correspondant à la vanne d'obturation et/ou à l'autre vanne est constitué par une enceinte,

. qui est fermée,

. qui est reliée par un conduit à un organe à fluide sous pression de commande de l'ouverture de la vanne correspondante, dont l'effet est antagoniste d'un organe élastique de rappel de cette vanne dans sa configuration d'obturation, et

. qui contient un gaz spécifique, tel que l'azote, au moins partiellement liquéfiable à la température du gaz liquéfié contenu dans la citerne, et, à l'état gazeux, à une température supérieure à celle dudit gaz liquéfié de la citerne, et qi est sa température lorsque ladite enceinte est disposée au-dessus de la surface du gaz liquéfié contenu dans la citerne ;

- l'élément sensible correspondant à la vanne d'obturation et/ou à l'autre vanne comporte un revêtement thermiquement isolant par rapport aux gaz et poreux par rapport aux liquides,

- une enveloppe ajourée entoure le revêtement et coopère au maintien de son intégrité,

- ladite enveloppe est constituée par un grillage en acier inoxydable,

- l'élément sensible correspondant à la vanne d'obturation et/ou à l'autre vanne est disposé à l'intérieur d'une cage ajourée mécaniquement résistante à la pression interne maximale dudit élément sensible,

- ledit élément sensible comporte un dispositif de protection contre le contact du gaz liquéfié résultant seulement d'une agitation éventuelle de la surface de ce gaz liquéfié contenu dans la citerne,

- l'élément sensible correspondant à la vanne d'obturation et/ou à l'autre vanne est disposé en un emplacement exposé à une fuite thermique partielle externe à la citerne.

L'invention sera mieux comprise, et des caractéristiques secondaires et leurs avantages apparaîtront au cours de la description de réalisations donnée ci-dessous à titre d'exemple.

Il est entendu que la description et les dessins ne sont donnés qu'à titre indicatif et non limitatif.

Il sera fait référence aux dessins annexés, dans lesquels :

- les figures 1 et 2 représentent deux configurations distinctes d'une première réalisation conforme à l'invention,

- les figures 3 et 4 représentent deux configurations distinctes d'une deuxième réalisation conforme à l'invention, et,

- la figure 5 est une coupe de l'élément sensible d'un dispositif thermosensible utilisé dans les réalisations des figures 1 à 4.

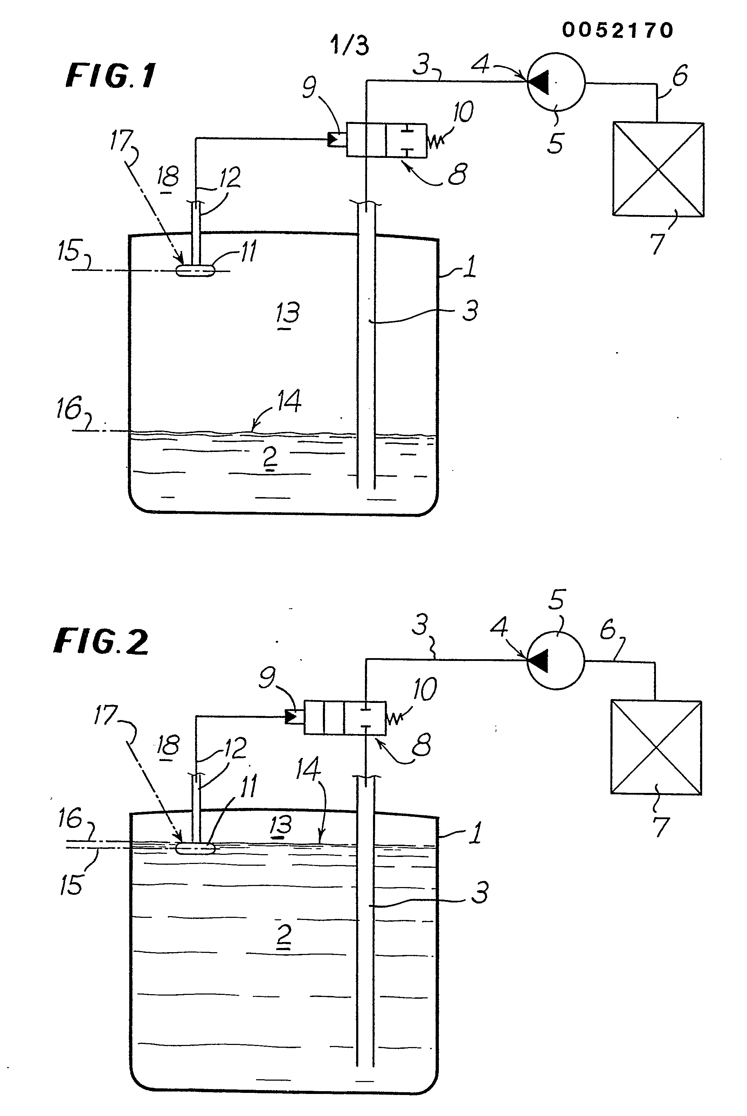

La disposition représentée par les figures 1 et 2 est celle d'une citerne 1 d'un méthanier emplie de méthane liquide 2. Un conduit de remplissage 3 relie cette citerne au raccord de refoulement 4 d'une pompe de remplissage 5, qui est elle-même reliée par son conduit d'aspiration 6 à un réservoir de méthane 7. Une vanne d'obturation 8 est disposée sur le conduit 3.

Cette vanne 8 est susceptible d'occuper deux positions, une de non-obturation du conduit 3, représentée sur la figure 1, et, une d'obturation du conduit 3, représentée sur la figure 2. La vanne est attelée, d'une part, à un vérin 9 de commande de la position de non-obturation, d'autre part, à un ressort 10, d'effet antagoniste de celui du vérin, et donc de commande de la position d'obturation.

En outre, un dispositif thermosensible 11 est placé à l'intérieur de la citerne 1 et est constitué par une enceinte reliée au vérin 9 par un conduit 12 et contenant un gaz qui est liquéfiable à la température du méthane liquide 2, et se présente sous phase gazeuse lorsque l'enceinte 11 ne baigne pas dans le méthane liquide, et est disposée dans le volume 13 de méthane sous phase gazeuse, situé au-dessus de la surface 14 du méthane liquide. L'enceinte 11 est placée à la partie supérieure de la citerne 1, à un niveau 15, qui est supérieur au niveau 16 de la surface 14 dans la configuration de la figure 1, et qui est au contraire inférieur à ce niveau 16 dans la configuration de la figure 2, dans laquelle la quantité de méthane liquide 2 contenue dans la citerne est supérieure à celle de la configuration de la figure 1.

Il est enfin avantageux que l'enceinte 11 soit exposée à une légère fuite thermique 17, par exemple constituée par un conduit de communication de l'environnement externe de l'enceinte avec l'extérieur 18 de la citerne 1.

On notera encore que le gaz de l'enceinte 11 peut être de l'azote, qui est sous phase gazeuse au-dessus de -147° C et qui est sous phase liquide en dessous de -147° C, dont, en particulier à -160° C, température du méthane liquide 2. De plus, le méthane sous phase gazeuse, de l'espace 13, a une température supérieure à -147° C, du moins dans la zone de la fuite thermique 17. Par ailleurs, comme cela est bien connu, le volume libre d'une masse d'azote déterminée est très inférieur sous la phase liquide au volume de la même masse sous la phase gazeuse. L'azote enfermé dans l'enceinte 11, le conduit 12 et le vérin 9 n'a pas un volume libre, de sorte que la pression dans l'enceinte 11 et le vérin 9 a une valeur très supérieure, lorsque l'azote est dans sa phase gazeuse, à la valeur correspondant à la phase liquide, la différence de valeurs étant telle que l'effet de cette pression dans le vérin 9, dans le premier cas, est prépondérante sur l'effet du ressort 10 et place la vanne 8 dans sa position de non-obturation du conduit 3 (figure 1), et, dans le deuxième cas, est au contraire inférieure à l'effet du ressort 10, plaçant la vanne dans sa position d'obturation du conduit 3 (figure 2).

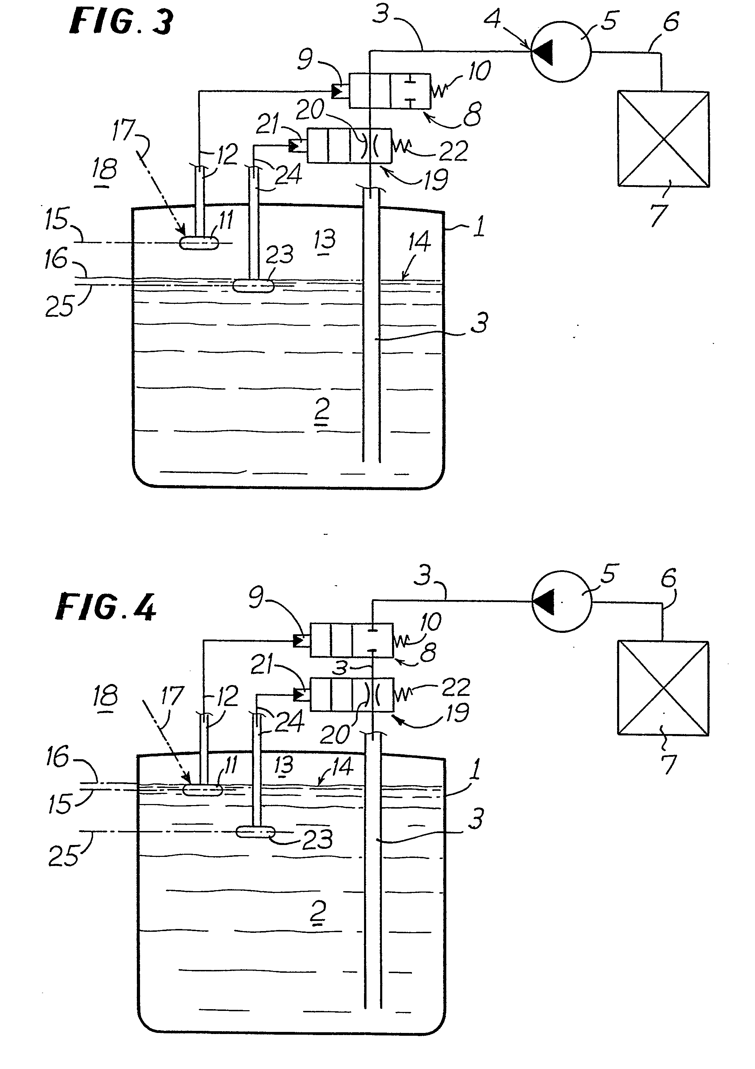

En regard des figures 3 et 4, on retrouve les dispositions des figures 1 et 2, mais complétées. Ainsi, sur le conduit
3, est disposée une autre vanne 19 susceptible d'occuper deux positions, une de non-obturation, et une d'obturation seulement partielle du conduit 3 (figures 3 et 4), dans laquelle une restriction 20 est disposée sur le conduit 3. Cette autre vanne 19 est
attelée d'une part, à un vérin 21 de commande de la non-obturation
partielle, d'autre part, à un ressort 22, d'effet antagoniste de
celui du vérin 21, et donc de commande de la position d'obturation
partielle.

Un autre dispositif thermosensible 23 est placé à l'intérieur de la citerne 1 et est analogue au dispositif 11, étant
constitué par une enceinte 23 reliée au vérin 21 par un conduit 24.
Les caractéristiques fonctionnelles sont identiques à celles de
l'enceinte 11, la vanne 19 étant placée en position de non-
obturation, lorsque le niveau 16 de la surface 14 du méthane liquide 2 est inférieur au niveau 25 de l'enceinte 23, et étant, au contraire,placée en position d'obturation partielle (figures 3 et 4),
lorsque le niveau 16 de la surface du méthane liquide 2 est supérieur à celui (25) de l'enceinte 23.

A noter que le niveau 25 de l'enceinte 23 est légèrement inférieur au niveau 15 de l'enceinte 11, l'enceinte 23 étant
cependant disposée dans la partie supérieure de la citerne 1.

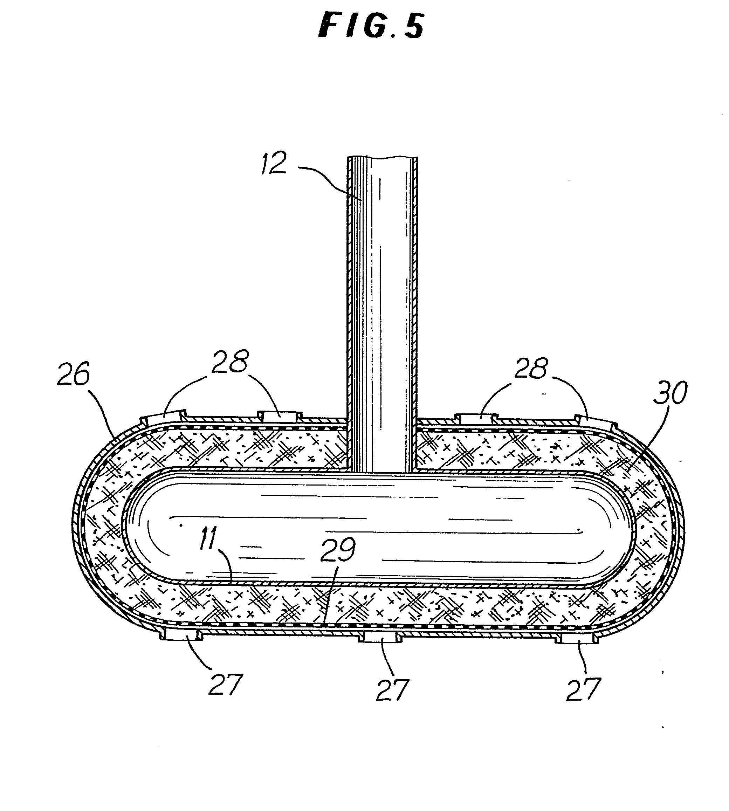

Un des deux dispositifs thermosensibles 11 et 23, le
dispositif 11, a été représenté sur la figure 5. On retrouve l'enceinte 11 proprement dite et le conduit 12, l'enceinte étant contenue dans une enveloppe 26 munie de trous inférieurs 27 de pénétration du méthane liquide entre l'enveloppe 26 et l'enceinte 11,
et de trous supérieurs 28 d'échappement du méthane gazeux. L'enveloppe 26 est conçue pour résister mécaniquement aux efforts d'éclatement éventuel de l'enceinte 11, (c'est-à-dire à une pression de
l'ordre de 85 bars). A proximité de l'enveloppe 26, entre celle-ci
et l'enceinte 11, est disposé un fin grillage 29 susceptible de retenir les morceaux de matériaux divers qui se trouveraient entre
l'enceinte et ce grillage. Enfin, entre le grillage 29 et l'enceinte 11, est disposé le matériau 30 d'isolation thermique (mousse ou laine de verre, mousse de polyuréthane, mousse de chlorure de PVC, etc.). L'ensemble de l'enveloppe 26, du grillage 29 et du matériau 30 possède une certaine inertie thermique et assure un isolement de l'enceinte, qui n'est pas soumise au barbotage de la surface agitée du méthane liquide, tout en restant sensible à l'immersion dans ledit méthane liquide.

Le fonctionnement des dispositions décrites est exposé ci-après.

Dans le cas des figures 1 et 2, le conduit de remplissage 3 est d'abord ouvert et le remplissage libre (figure 1), jusqu'à ce que le niveau 16 de la surface 14 du méthane liquide atteigne, ou devienne supérieur au niveau 15 de l'enceinte 11 (figure 2). La liquéfaction de l'azote contenu dans cette enceinte provoque le changement de position de la vanne 8, qui obture le conduit 3 et arrête le remplissage (figure 2).

Il peut être désiré de fermer le conduit 3 progressivement. C'est ce que réalise le dispositif des figures 3 et 4. En effet, le conduit 3 est d'abord ouvert. Puis, le niveau 16 de la surface 14 du méthane liquide 2 atteint, ou devient supérieur au niveau 25 de l'enceinte 23 sans toutefois atteindre le niveau 15 de l'enceinte 23 (figure 3). La vanne 19 est seule commandée et obture partiellement le conduit 3, ralentissant le remplisssage de la citerne 1. Enfin, le niveau 16 de la surface du méthane liquide 2 atteint, ou devient supérieur au niveau 15 de l'enceinte 11 (figure 4), ce qui provoque alors l'obturation du conduit 3 par la vanne 8, et l'arrêt du remplissage.

La sécurité obtenue est en outre positive, car une chute accidentelle de la pression dans l'enceinte 11 provoque l'arrêt du remplissage.

De plus, le contrôle du remplissage est effectué par le niveau même de la surface 14 du méthane liquide 2.

Aucune pièce en mouvement n'est contenue dans la citerne 1, les vannes étant disposées à l'extérieur de cette citerne.

Un manomètre et un raccord de remplissage des enceintes 11 et/ou 23 seront opportunément disposés sur les conduits 12 et/ou 24 pour contrôler et compléter le remplissage des enceintes en azote.

Compte tenu de la réalisation de la figure 5, l'enceinte correspondante a un fonctionnement insensible au clapotis du méthane liquide, mais sensible uniquement à l'immersion dans le liquide.

L'enveloppe 26 est une sécurité contre un éventuel éclatement de l'enceinte, alors que le grillage 29 permet de retenir les débris, notamment de matériau d'isolation thermique 30, et d'éviter ainsi de perturber le fonctionnement normal des pompes et des vannes utilisées.

L'invention n'est au reste pas limitée aux réalisations décrites, mais en couvre au contraire toutes les variantes qui pourraient leur être apportées sans sortir de leur cadre, ni de leur esprit.

Ainsi, l'enveloppe 26 peut avantageusement être réalisée en alliage fritté, sans présenter d'orifices 27 et 28, la porosité du métal fritté suffisant à permettre la circulation du méthane jusqu'au contact de l'enceinte 11. Une telle enveloppe présente par ailleurs la résistance mécanique désirée.

De même, des dispositifs de sécurité connus en eux-mêmes, tels que manocontacts agissant sous l'action de la variation de la pression du gaz contenu dans l'enceinte 11 ou contacts agissant lorsque la vanne 8 est en position d'obturation, peuvent être ajoutés pour provoquer l'arrêt de la pompe 5 sans sortir du cadre de la présente invention.

On peut mentionner, par ailleurs, que la nature du gaz spécifique dépend bien entendu de la nature du gaz liquéfié 2 et donc de sa température d'ébullition dans les conditions d'emploi de la citerne. Si ce gaz est du gaz naturel liquéfié aux environs de moins 160° C, le gaz spécifique sera de l'azote, mais si le gaz liquéfié 2 est de l'éthylène à moins 105° C, le gaz spécifique pourra être du méthane -les pressions indiquées dans le texte de la demande seront alors modifiées sans que l'on sorte pour autant du cadre de la présente invention.

8

Le réservoir de méthane 7 peut être constitué, soit par une autre citerne du même navire méthanier, soit par un réservoir de stockage terrestre.

9

REVENDICATIONS

1. Citerne destinée à contenir un gaz liquéfié, telle que, notamment, une citerne de navire transporteur de gaz naturel liquéfié ou de gaz de pétrole, constituée par la citerne proprement dite, par un conduit de remplissage, et par au moins une vanne d'obturation dudit conduit, caractérisée en ce qu'elle est munie d'au moins un dispositif thermosensible de commande de ladite vanne d'obturation,

. qui est attelé à cette vanne,

. dont l'élément sensible à la température est disposé à l'intérieur de la citerne à proximité d'un niveau de remplissage prédéterminé et a une température susceptible d'être égale, soit à la température du gaz liquéfié contenu dans la citerne lorsque ledit gaz liquéfié atteint le niveau de remplissage prédéterminé, soit à une température supérieure à celle dudit gaz liquéfié lorsque ce niveau de remplissage prédéterminé n'est pas atteint, et

. dont l'effet sur la vanne d'obturation est de placer cette vanne dans une configuration d'obturation complète du conduit de remplissage, lorsque le niveau de remplissage prédéterminé est atteint, et, dans sa configuration de non-obturation du conduit de remplissage, lorsque le niveau de remplissage prédéterminé n'est pas atteint.

2. Citerne selon la revendication 1, caractérisée en ce qu'elle est munie d'une autre vanne, disposée sur le conduit de remplissage, et d'un autre dispositif thermosensible de commande de la configuration de cette autre vanne, dont l'élément sensible est disposé à proximité d'un autre niveau de remplissage prédéterminé, inférieur audit niveau de remplissage, cependant que l'effet de cet autre dispositif thermosensible sur cette autre vanne est de placer celle-ci dans une configuration d'obturation seulement partielle du conduit de remplissage lorsque ledit autre niveau de remplissage prédéterminé est atteint, et, dans sa configuration de non-obturation du conduit de remplissage, lorsque cet autre niveau de remplissage prédéterminé n'est pas atteint.

3. Citerne selon l'une quelconque des revendications 1 et 2, caractérisée en ce que l'élément sensible correspondant à la vanne d'obturation et/ou à l'autre vanne est constitué par une enceinte

. qui est fermée,

. qui est reliée par un conduit à un organe à fluide sous pression de commande de l'ouverture de la vanne correspondante, dont l'effet est antagoniste d'un organe élastique de rappel de cette vanne dans sa configuration d'obturation, et,

. qui contient un gaz spécifique, tel que l'azote, au moins partiellement liquéfiable à la température du gaz liquéfié contenu dans la citerne, et, à l'état gazeux, à une température supérieure à celle dudit gaz liquéfié de la citerne, et qui est sa température lorsque ladite enceinte est disposée au-dessus de la surface du gaz liquéfié contenu dans la citerne.

4. Citerne selon l'une quelconque des revendications 1 à 3, caractérisée en ce que l'élément sensible correspondant à la vanne d'obturation et/ou à l'autre vanne comporte un revêtement thermiquement isolant par rapport aux gaz et poreux par rapport aux liquides.

5. Citerne selon le groupe des deux revendications 3 et 4, caractérisée en ce qu'une enveloppe ajourée entoure le revêtement et coopère au maintien de son intégrité.

6. Citerne selon la revendication 5, caractérisée en ce que ladite enveloppe est constituée par un grillage en acier inoxydable.

7. Citerne selon l'une quelconque des revendications 1 à 6, caractérisée en ce que l'élément sensible correspondant à la vanne d'obturation et/ou à l'autre vanne est disposé à l'intérieur d'une cage ajourée mécaniquement résistante à la pression interne maximale dudit élément sensible.

8. Citerne selon l'une quelconque des revendications 4 à 7, caractérisée en ce queledit élément sensible comporte un dispositif de protection contre le contact du gaz liquéfié résultant seulement d'une agitation éventuelle de la surface de ce gaz liquéfié contenu dans la citerne.

9. Citerne selon l'une quelconque des revendications 1 à 8, caractérisée en ce que l'élément sensible correspondant à la vanne d'obturation et/ou à l'autre vanne est disposé en un emplacement exposé à une fuite thermique partielle externe à la citerne.

0052170

**FIG.1**

**FIG.2**

0052170

**FIG. 3**

**FIG. 4**

FIG.5

Office européen
des brevets

**RAPPORT DE RECHERCHE EUROPEENNE**

Numéro de la demande

EP 80 40 1651

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendica-tion concernée | |
| X | FR - A - 2 313 707 (CONSIGLIO NAZIONALE DELLE RICERCHE) <br><br> * Page 1, lignes 1-23; page 1, ligne 29 - page 2, ligne 10; page 2, ligne 36 - page 5, ligne 28; figures 1,2 * <br><br> -- | 1 | B 63 B 25/16 <br> F 17 C 13/02 <br> G 05 D 9/02 |
| X | US - A - 3 262 280 (R.L. CHANEY) <br><br> * Colonne 1, lignes 10-13; co-lonne 1, ligne 51 - colonne 2, ligne 19; colonne 2, ligne 58 - colonne 5, ligne 23; figures 1-3 * <br><br> -- | 1,3,8 | |
| | FR - A - 1 474 849 (COMP. FRAN-CAISE THOMSON-HOUSTON) <br><br> * Page 1, colonne 1, 1er alinéa; page 1, colonne 2, alinéa 4 - page 3, colonne 2, alinéa 3; figures 1-4 * <br><br> -- | 1,3 | **DOMAINES TECHNIQUES RECHERCHES (Int. Cl.³)** <br><br> F 17 C 13/02 <br>           13/12 <br> G 05 D 9/02 |
| A | FR - A - 2 099 987 (PHILIPS' GLOEILAMPEN) | | |
| A | FR - A - 1 455 120 (COMP. FRANCAISE THOMSON-HOUSTON) <br><br> ---- | | **CATEGORIE DES DOCUMENTS CITES** <br><br> X: particulièrement pertinent <br> A: arrière-plan technologique <br> O: divulgation non-écrite <br> P: document intercalaire <br> T: théorie ou principe à la base de l'invention <br> E: demande faisant interférence <br> D: document cité dans la demande <br> L: document cité pour d'autres raisons <br><br> &: membre de la même famille, document correspondant |

Le présent rapport de recherche a été établi pour toutes les revendications

| Lieu de la recherche | Date d'achèvement de la recherche | Examinateur |
|---|---|---|
| La Haye | 12-06-1981 | SIEM |